# EUROPÄISCHE PATENTSCHRIFT

(11) **EP 1 089 000 B1**
(45) Veröffentlichungstag und Bekanntmachung des Hinweises auf die Patenterteilung: **26.01.2005**
(21) Anmeldenummer: 00120628.3
(22) Anmeldetag: 21.09.2000
(51) Int. Cl.: F16C 13/00, D21G 1/02

(54) **Durchbiegungseinstellwalze und Verfahren zu ihrem Betrieb**
Controlled deflection roll and method for operating it
Rouleau à réglage de la flexion et procédé pour la mise en oeuvre

(30) Priorität: 01.10.1999 DE 19947398; 30.05.2000 DE 10026939
(43) Veröffentlichungstag der Anmeldung: 04.04.2001
(73) Patentinhaber: Voith Paper Patent GmbH, 89522 Heidenheim (DE)
(72) Erfinder: Van Haag, Rolf, Dr., 47647 Kerken (DE)
(74) Vertreter: Knoblauch, Andreas, Dr.-Ing.

(56) Entgegenhaltungen:
- EP-B- 0 332 594
- DE-A- 2 254 392
- DE-A- 4 015 237
- DE-A- 19 603 651
- DE-U- 8 808 352

## Beschreibung

Die Erfindung betrifft eine Durchbiegungseinstellwalze mit einem drehbaren Walzenmantel, einem innerhalb des Walzenmantels angeordneten nicht drehenden Träger, einer hydraulischen Stützelementanordnung zwischen Träger und Walzenmantel, einem Lagerring an jedem Ende des Walzenmantels, der in einer Pressenebene relativ zum Träger bewegbar ist, und einer Lageranordnung zwischen Lagerring und Walzenmantel, die durch mindestens drei in Umfangsrichtung verteilt angeordnete hydrostatische Stützelemente gebildet ist, von denen mindestens eines gegenüber dem Lagerring beweglich ist. Ferner betrifft die Erfindung ein Verfahren zum Betreiben einer Durchbiegungseinstellwalze mit einem Walzenmantel, der um einen Träger rotiert und im Bereich seiner axialen Enden von jeweils einer Lageranordnung abgestützt wird, die einen Lagerring und mindestens drei in Umfangsrichtung auf dem Lagerring verteilte hydrostatische Stützelemente mit Lagertaschen aufweist.

Eine derartige Durchbiegungseinstellwalze und ein derartiges Verfahren sind aus DE 88 08 352 U1 bekannt. Die Stützelemente bilden gleichzeitig eine Axiallagerung.

Eine weitere Durchbiegungseinstellwalze ist aus EP 0 332 594 B1 bekannt. Im Betrieb rotiert der Walzenmantel um den Träger. Durchbiegungen, die sich durch eine Belastung des Walzenmantels ergeben könnten, werden durch die hydraulische Stützelementanordnung aufgenommen, die den Walzenmantel von innen gegenüber dem Träger abstützt. Dies führt zwar unter Umständen zu einer Durchbiegung des Trägers. Die Biegelinie des Walzenmantels kann aber entsprechend besser beeinflußt werden.

Die Stützelementanordnung kann allerdings nur Kräfte aufnehmen, die in der Pressenebene wirken, beispielsweise von einer Gegenwalze oder einem sich daran anschließenden Walzenstapel erzeugt werden. Zusätzlich ist es erforderlich, daß der Walzenmantel mit einem Lager auf dem Träger gehalten wird, das eine Rotation des Walzenmantels gegenüber dem Träger und gleichzeitig eine gewisse Positionierung erlaubt.

Dieses Lager oder - allgemeiner gesagt - diese Lageranordnung wird nun in verschiedenen Situationen unterschiedlich belastet. Im Betrieb wird der Walzenmantel von den hydrostatischen Stützelementen gegenüber dem Träger abgestützt. Die Lageranordnung kann damit zumindest bei einem vertikal ausgerichteten Walzenstapel, bei dem auch die Stützelemente zwischen Träger und Walzenmantel eine vertikal ausgerichtete Kraftkomponente erzeugen, praktisch frei von Stützkräften gehalten werden. Das Eigengewicht des Walzenmantels und die in Pressenrichtung wirkenden Kräfte, die von anderen Walzen aufgebracht werden, werden von den Stützelementen zwischen Walzenmantel und Träger aufgenommen. Die Lageranordnung dient in diesem Fall praktisch ausschließlich zur Positionierung des Walzenmantels gegenüber dem Träger. Wenn hingegen die Nips des Walzenstapels geöffnet werden, dann ruht das Gewicht des Walzenmantels auf der Lageranordnung. In diesem Fall muß die Lageranordnung in der Lage sein, dieses Gewicht aufzunehmen und zwar auch dann, wenn sich der Walzenmantel dreht. In allen Fällen muß sichergestellt sein, daß die Lageranordnung mit möglichst kleinem Spiel läuft, das ein vorbestimmtes Maß nicht überschreiten darf.

Im bekannten Fall wird dieses Lager durch Wälzkörper gebildet, wie es im Stand der Technik üblich ist. Allerdings hat sich herausgestellt, daß derartige Wälzlager bei immer schneller laufenden Walzen nicht mehr mit der notwendigen Zuverlässigkeit arbeiten.

Der Erfindung liegt die Aufgabe zugrunde, eine Durchbiegungseinstellwalze mit einer höheren Betriebsgeschwindigkeit betreiben zu können.

Diese Aufgabe wird bei einer Durchbiegungseinstellwalze dadurch gelöst, daß das Stützelement unter Last bis zur Hartlage in den Lagerring einfahrbar ist.

Damit ist es möglich, eine Durchbiegungseinstellwalze mit Mantelhub auch bei höheren Geschwindigkeiten zu betreiben, d.h. Umfangsgeschwindigkeiten in der Größenordnung von 2000 m/min. und mehr. Das Vorhandensein von mindestens drei in Umfangsrichtung verteilten Stützelementen erlaubt eine definierte Abstützung in allen radialen Richtungen. Da mindestens ein, vorzugsweise aber mehrere oder sogar alle Stützelemente gegenüber dem Lagerring beweglich sind, sind sie in der Lage, sich auch bei Durchmesserveränderungen des Walzenmantels und/oder des Lagerringes bzw. des Trägers, die durchaus nicht immer gleichartig verlaufen müssen, selbst nachzustellen und somit zu gewährleisten, daß der Walzenmantel immer im gewünschten Maße unterstützt ist. Spiele, wie sie von Wälzlagern her bekannt sind und die unter Umständen zu einem ungünstigen Schwingungsverhalten der Walze im Betrieb führen könnten, werden mit dieser Art der Lagerung sehr kleingehalten. Die hydrostatische Abstützung des Walzenmantels im Bereich der Rotationslager ermöglicht zudem einen relativ verschleißarmen Betrieb und zwar auch bei höheren Geschwindigkeiten. Zwischen der Fußfläche des Stützelements und dem Lagerring tritt keine Relativbewegung auf, die zu einer Reibung führen könnte, so daß man hier durchaus in Kauf nehmen kann, daß das Stützelement "bis zum Anschlag" in den Lagerring eingefahren werden kann. Im Betrieb wird der Walzenmantel in bekannter Weise unterstützt, beispielsweise von den Stützelementen zwischen Träger und Walzenmantel oder auch von unter dem Walzenmantel angeordneten weiteren Walzen, die mit der in Frage stehenden Durchbiegungseinstellwalze einen Nip bilden. In diesem Fall ist die Lageranordnung praktisch frei von äußeren Stützkräften. Sie dient hauptsächlich dazu, den Walzenmantel gegenüber dem Träger zu positionieren. Aufgrund des mindestens einen beweglichen Stützelementes zwischen Lagerring und Walzenmantel ist es möglich, die Lageranordnung mit einem ausgesprochen geringen Spiel auszubilden. Die Stützelemente können unter Ausbildung eines Flüssigkeitsfilms der Hydraulikflüssigkeit immer in unmittelbarer Nachbarschaft der Innenseite des Walzenmantels gehalten werden.

Dadurch, daß in einer bevorzugten Ausgestaltung die wirksame Fläche der Lagertaschenanordnung, d.h. der Bereich, in dem der Druck zwischen Walzenmantel und Stützelement wirken kann, größer ist als die wirksame Fläche zwischen Stützelement und Lagerring, ist sichergestellt, daß das Stützelement zwar mit einer gewissen Kraft in den Lagerring hineingedrückt werden kann, wenn entsprechende Kräfte auf den Walzenmantel wirken. Da sich aber oberhalb und unterhalb des Stützelements hydraulische Drücke aufbauen, bleibt die Kraft, mit der das Stützelement am Lagerring anliegt, begrenzt. Ihre Größe ist mit der Flächendifferenz beeinflußbar. Damit ergibt sich eine stabile Abstützung auch bei sich verändernden Durchmessern des Walzenmantels. Es ist praktisch immer sichergestellt, daß der Walzenmantel auf einem Flüssigkeitsfilm gleiten kann.

Auch ist von Vorteil, wenn die Lagertaschenanordnung mit einer Versorgungseinrichtung verbunden ist, die einen konstanten Volumenstrom von hydraulischer Flüssigkeit liefert. Aufgrund der Versorgung der Lagertaschen mit einem konstanten Volumenstrom der Hydraulikflüssigkeit können auch Belastungsänderungen problemlos aufgefangen werden. Auch dann, wenn das Gewicht des Walzenmantels von der Lageranordnung getragen werden muß, ist eine zuverlässige Abstützung problemlos möglich. Das entgegen der Schwerkraftrichtung liegende Stützelement wird damit zwar bis zum Anschlag, d.h. in Hartlage, in den Lagerring eingefahren. Aufgrund der Versorgung der Lagertaschen mit einem konstanten Volumenstrom der Hydraulikflüssigkeit ist aber immer noch dafür gesorgt, daß der Flüssigkeitsfilm zwischen dem Stützelement und dem Walzenmantel aufrechterhalten wird, weitgehend unabhängig von der Belastung. Durch den konstanten Volumenstrom von hydraulischer Flüssigkeit herrscht zwischen dem Zylinderraum unter dem Stützelement und der hydrostatischen Tasche zwischen Stützelement und Walzenmantel eine konstante Druckdifferenz. Durch das Aufbringen von Last auf die Walze wird sich das dem Nip zugewandte Stützelement auf dem Boden seiner Zylinderbohrung abstützen. Da seine Kapillare aber weiterhin mit Hydraulikflüssigkeit versorgt wird und zwar mit konstantem Volumenstrom, wird der Druck in den Taschen steigen. Bei jeder Last stellen sich die Drücke in den Taschen selbsttätig ein. Durch den konstanten Volumenstrom kann man unabhängig von der Last sicherstellen, daß die Stützfunktion für jedes Stützelement erhalten bleibt.

Vorzugsweise ist die Lagertaschenanordnung über eine das Stützelement durchsetzende Kapillarenanordnung mit einem Druckraum zwischen Stützelement und Lagerring verbunden. Über die Kapillarenanordnung läßt sich ein Druckabfall erzielen, der dafür sorgt, daß zwischen der am Walzenmantel anliegenden Stützfläche des Stützelements immer ein gewisser Spalt vorhanden ist. Aufgrund der Versorgungseinrichtung, die einen konstanten Volumenstrom von hydraulischer Flüssigkeit liefert, herrscht zwischen dem Zylinderraum unter dem Stützelement und der hydrostatischen Tasche zwischen Stützelement und Walzenmantel eine konstante Druckdifferenz. Durch das Aufbringen von Last auf die Walze wird sich das dem Nip zugewandte Stützelement auf dem Boden seiner Zylinderbohrung abstützen. Da seine Kapillare aber weiterhin mit Hydraulikflüssigkeit versorgt wird und zwar mit konstantem Volumenstrom, wird der Druck in den Taschen steigen. Bei jeder Last stellen sich die Drücke in den Taschen selbsttätig ein. Durch den konstanten Volumenstrom kann man unabhängig von der Last sicherstellen, daß die Stützfunktion für jedes Stützelement erhalten bleibt, und zwar auch dann, wenn das Stützelement bis zum Anschlag eingefahren ist.

Vorzugsweise ist die Kapillarenanordnung so dimensioniert ist, daß im unbelasteten Zustand eine vorbestimmte Vorspannkraft nicht überschritten wird, bei einer vorbestimmten Belastung aber eine vorbestimmte minimale Spalthöhe gewährleistet ist. Der unbelastete Zustand ist leicht ermittelbar. Man dimensioniert die Kapillarenanordnung so, daß im unbelasteten Zustand eine ausreichende Menge von Hydraulikflüssigkeit zur Lagertaschenanordnung fließen kann, so daß der Druck im Druckraum einen vorbestimmten Wert nicht überschreitet. Damit wird im unbelasteten Zustand eine zu starke Belastung des Walzenmantels verhindert. Umgekehrt darf der Drosselwiderstand der Kapillarenanordnung nicht zu klein sein, so daß bei jeder Belastung gewährleistet ist, daß der Spalt zwischen Stützelement und Walzenmantel mit einer vorbestimmten Größenordnung erhalten bleibt.

Hierbei ist besonders bevorzugt, daß die Versorgungseinrichtung so an die Kapillarenanordnung angepaßt ist, daß sich bei maximaler Last ein minimaler Spalt zwischen Stützelement und Walzenmantel im Bereich von 20 bis 30 µm ergibt. Dieser Spalt ist ausreichend dick, um eine Beschädigung des Walzenmantels durch Aufsetzen auf dem Stützelement zu verhindern. Er ist andererseits klein genug, um den Ölstrom durch das Stützelement ausreichend zu drosseln, so daß der Flüssigkeitsverbrauch in einem vertretbarem Maß bleibt.

Vorteilhafterweise weisen die beweglichen Stützelemente eine Hubhöhe gegenüber dem Lagerring in radialer Richtung auf, die einer maximalen Veränderung entspricht, die sich aus thermischen Durchmesserunterschieden und/oder Walzenmantel- bzw. Trägerverformungen durch Niplasten ergibt. Man die Hubhöhe also auf sehr kleine Werte beschränken. Der Hub muß nur so groß sein, daß er die genannten Veränderungen, die sich aus thermischen Durchmesserunterschieden und Verformungen des Walzenmantels bzw. der Achsen durch Niplasten ergeben, ausgleichen kann. Der Mantelhub der Walze wird durch die Führung des Lagerringes am Träger realisiert. Aufgrund der sehr kleinen Hubhöhe ist im gesamten Arbeitsbereich der Stützelemente eine relativ genaue Führung im Lagerring möglich. Dies wiederum verbessert die Betriebseigenschaften der Walze.

Hierbei ist besonders bevorzugt, daß die Hubhöhe im Bereich von 0,1 bis 0,5 mm liegt. Dies entspricht im wesentlichen dem Spiel eines C3-Pendelrollenlagers, wobei durch die Hubhöhe gewährleistet wird, daß bei der beschriebenen Abstützung eben kein Spiel auftritt.

Vorzugsweise weist zumindest ein Stützelement an seiner dem Träger zugewandten Unterseite einen gekrümmten Boden auf. Dies gilt auf jeden Fall für das Stützelement, das bei einer Druckbeaufschlagung des Walzenmantels in der Pressenebene weiter in den Lagerring hineingedrückt wird. Mit dem gekrümmten Boden vermeidet man, daß das Stützelement mit einer Kante am Boden der Zylinderbohrung aufsetzt, wenn der Träger durch Belastung gekrümmt wird. Dies verringert den Verschleiß. Es wird ein hydrosotatisches Lager für eine Walze mit Mantelhub zur Verfügung gestellt, das den Anforderungen eines sich biegenden Trägers relativ gut gerecht wird. Der gekrümmte Boden des Stützelements kann entweder unmittelbar auf dem Boden der Zylinderbohrung aufsitzen und dort "abrollen" wenn der Träger durch Belastung gekrümmt wird. Es ist aber auch möglich, auf dem Boden der Zylinderbohrung einen Ring oder eine andere entsprechend konkav geformte Stützfläche anzuordnen, auf dem das Stützelement aufliegt. In diesem Fall wird das Stützelement am Boden der Zylinderbohrung nach wie vor flächig abgestützt und kann sich dennoch neigen.

In einer alternativen Ausgestaltung ist vorgesehen, daß zumindest ein Stützelement in einem Zylindergehäuse angeordnet ist, daß einen konkav gewölbten Boden aufweist, der sich auf einer entsprechend konvex gewölbten Fläche auf dem Träger abstützt. Auch in diesem Fall ist es zulässig, daß sich der Träger durchbiegt. Das Stützelement bleibt dabei allerdings in Ausrichtung zu der Zylinderbohrung in dem Zylindergehäuse. Das komplette Zylindergehäuse kann sich dann auf der gewölbten Fläche verschieben. Auch hier bleibt eine vollflächige Abstützung erhalten.

Vorzugsweise weisen die Stützelemente an einem Ende der Walze eine gekrümmte Stützfläche auf, die an einer gleichartig gekrümmten Lagerfläche an der Innenseite des Walzenmantels anliegt. Mit dieser Ausgestaltung erreicht man auf relativ einfache Art und Weise eine Axiallagerung des Walzenmantels gegenüber dem Lagerring an einer Seite. Der Walzenmantel kann sich aufgrund der Krümmung der Lagerfläche nicht axial gegenüber dem Stützelement verschieben.

Hierbei ist besonders bevorzugt, daß die Stützfläche entlang einer sich in einem Radialschnitt ergebenden Linie kreislinienförmig gekrümmt ist. Mit dieser Ausgestaltung wird zusätzlich zu der axialen Abstützung noch der Effekt erreicht, daß sich der Träger gegenüber dem Walzenmantel durchbiegen kann, ohne daß die Abstützeigenschaften der Stützelemente nennenswert verschlechtert werden. Wenn sich der Träger durchbiegt, dann wandert die Stützfläche mit ihrer Oberfläche entlang der besagten Kreislinie, stützt aber den Walzenmantel aber nach wie vor zuverlässig ab.

In einer alternativen oder zusätzlichen Ausgestaltung kann vorgesehen sein, daß ein Lagerring über hydrostatische Gleitflächen axial am Walzenmantel anliegt. Hierdurch läßt sich an einem axialen Ende der Walze ein Festlager realisieren.

Vorzugsweise sind die Lagerringe auf Endabschnitten des Trägers angeordnet, die einen geringeren Durchmesser als ein Abschnitt des Trägers axial zwischen den Endabschnitten aufweisen. Damit erreicht man zwei Vorteile. Zum einen steht ausreichend Platz zur Verfügung, den man zur Unterbringung der Lagerringe und der Stützelemente verwenden kann. Zum anderen ist der Träger über den größten Teil seiner Länge im mittleren Bereich ausreichend stark dimensioniert, um die hydraulische Stützelementanordnung abstützen zu können. Dies wiederum hat zur Folge, daß die Durchbiegung des Trägers und damit auch die Neigung der Stützelemente zum Walzenmantel kleingehalten werden kann.

Vorzugsweise ist zwischen dem Lagerring und dem Stützelement eine Feder angeordnet. Wie oben ausgeführt worden ist, werden die Stützelemente mit einem konstanten Volumenstrom beaufschlagt, der auch in die Lagertaschen gelangt. Die Stützelemente haben in dem Lagerring nur einen geringen Hub, der etwa dem Lagerspiel eines Wälzlagers entspricht. Im Falle einer anstehenden Lagerkraft fahren die belasteten Stützelemente in den Lagerring auf Anschlag oder in Hartlage. In diesem Fall steigt der Druck über dem Stützelement an, bis das Kräftegleichgewicht erreicht ist. Da aufgrund der konstanten Volumenstroms auch der Druck unter den Stützelementen ansteigt, ist die Anlagekraft des Stützelements am Lagerring im Verhältnis zur Gesamtkraft, die das Stützelement aufnimmt, sehr klein. Sie hängt vom Flächenverhältnis der Lagertaschenfläche zur Kolbenfläche des Stützelements ab. Bei einem üblichen Flächenverhältnis von 1,1 beträgt die Anlagekraft daher nur etwa 10 % der Stützelementenkraft. Durch dieses große Übersetzungsverhältnis ist es möglich, die Kraftaufnahme unter dem Stützelement auch durch eine handelsübliche elastische Feder, z.B. eine Tellerfeder, aufzufangen. Dies bietet weitere Vorteile, wie im folgenden beschrieben werden wird.

Vorzugsweise weist das Stützelement einen parallel zur Feder bewegbaren Anschlag auf, der nach einem vorbestimmten Federweg zur Anlage an den Lagerring kommt. Mit dieser Ausgestaltung kann die Kraft-Weg-Kennlinie des Stützelements individuell gestaltet werden. Bei einer Bettung des Stützelements auf einer Feder erhält man eine lineare Kraft-Weg-Charakteristik. Fährt das Stützelement hingegen in Hartlage, wenn der Anschlag zur Anlage an den Lagerring kommt, so ist die Wegänderung über die Kraftänderung praktisch nicht vorhanden. Durch eine Kombination dieser beiden Fälle läßt sich also in weiten Grenzen eine Federcharakteristik einstellen.

Auch ist bevorzugt, daß der maximale Federweg kürzer als der maximale Hub des Stützelements ist. In diesem Fall läßt sich eine weitere Eigenschaft in den Kraft-Weg-Verlauf einbauen. Ein Stützelement, das sich frei bewegen kann, erzeugt über den Weg eine konstante Anstellkraft. Wenn man also die obengenannten Kraft-Weg-Verhältnisse mit dem konstanten Kraft-Weg-Verlauf kombiniert, dann kann man bereits drei unterschiedliche Abschnitte im Kraft-Weg-Verhältnis realisieren.

Vorzugsweise weist die Stützfläche mindestens eine angeschrägte Anlaufkante auf. Diese Anlaufkante schafft einen hydrodynamischen Traganteil. Dies führt zu besseren Notlaufeigenschaften und geringerem Energieverbrauch.

Vorzugsweise ist zwischen dem Träger und dem Lagerring ein Kraftgeber angeordnet, der in radialer Richtung in einer Pressenebene wirkt. Damit ist es möglich, auch im Lagerbereich zusätzliche Kräfte auf den Walzenmantel aufbringen zu können. In diesem Fall zeigt sich der große Vorteil der Lagerung des Walzenmantels auf dem Lagerring über die Stützelemente dadurch, daß die Stützelemente diese zusätzliche Kraft praktisch verschleißfrei weitergeben können.

Bevorzugterweise ist in einer Zuleitung zum Druckraum eine Drossel angeordnet. Dies hat einen vorteilhaften Einfluß auf das Schwingungsverhalten. Drosseln an sich sind bekannt.

Die Aufgabe wird bei einem Verfahren der eingangs genannten Art dadurch gelöst, daß die Lagertaschen mit einem konstanten Volumenstrom von Hydraulikflüssigkeit versorgt werden und mindestens ein Stützelement unter Last bis zur Hartlage in den Lagerring eingefahren wird. Durch die Hartlage wird bei dem entsprechenden Stützelement eine definierte Position geschaffen. Das Stützelement wird dann unmittelbar durch den Lagerring abgestützt. Dadurch, daß die Lagertaschen mit einem konstanten Volumenstrom der Hydraulikflüssigkeit versorgt werden, ist aber nach wie vor sichergestellt, daß auch in diesem Zustand ein Flüssigkeitsfilm zwischen dem Walzenmantel und dem Stützelement aufrechterhalten werden kann. Im normalen Betrieb, bei dem das Gewicht des Walzenmantels auf andere Weise aufgefangen wird, kann das Stützelement wieder etwas ausgefahren werden. Dadurch ist sichergestellt, daß der Walzenmantel auch bei kleinen Änderungen seiner geometrischen Abmessungen, wie sie beispielsweise durch thermische Einflüsse bedingt sein können, immer praktisch spielfrei abgestützt wird.

Hierbei ist bevorzugt, daß die Hydraulikflüssigkeit durch eine Kapillarenanordnung im Stützelement geleitet wird. An der Kapillarenanordnung wird aufgrund des konstanten Volumenstromes ein konstanter Druckabfall erzeugt, der das Stützelement in eine Gleichgewichtssituation zwischen dem Lagerring und dem Walzenmantel bewegt. Das Stützelement ist sozusagen zwischen zwei Flüssigkeitspolstern eingespannt, nämlich zum einen dem Flüssigkeitsfilm zwischen dem Walzenmantel und dem Stützelement und zum anderen Flüssigkeit in dem Druckraum zwischen dem Stützelement und dem Lagerring. Erst dann, wenn die Kräfte auf das Stützelement zu groß werden, wird das Stützelement in die Hartlage am Lagerring gefahren. Auch in diesem Zustand ist aber vorgesehen, daß die Hydraulikflüssigkeit noch durch die Kapillarenanordnung zu der Lagertaschenanordnung gelangt.

Vorzugsweise macht man die wirksame Fläche der Lagertaschenanordnung größer als die Querschnittsfläche des Stützelements im Lagerring. Auf diese Weise wird gewährleistet, daß der Druckabfall über die Kapillarenanordnung kräftemäßig kompensiert werden kann.

Die Erfindung wird im folgenden anhand von bevorzugten Ausführungsbeispiels in Verbindung mit der Zeichnung näher beschrieben. Hierin zeigen:
- Fig. 1: einen Längsschnitt durch eine erste Ausführungsform einer Walze,
- Fig. 2: einen Schnitt II-II nach Fig. 1,
- Fig. 3: einen Schnitt III-III nach Fig. 1,
- Fig. 4: eine zweite Ausführungsform einer Walze,
- Fig. 5: eine schematische Darstellung zur Erläuterung von Kraftverhältnissen,
- Fig. 6: eine vergrößerte Darstellung einer dritten Ausführungsform eines Stützelements,
- Fig. 7: eine vergrößerte Darstellung einer vierten Ausführungsform eines Stützelements,
- Fig. 8: verschiedene Kraft-Weg-Verläufe,
- Fig. 9: eine Draufsicht auf ein Stützelement,
- Fig. 10: eine Schnittansicht durch ein Stützelement und
- Fig. 11: eine weitere Ausführungsform einer Walze im Querschnitt entsprechend Fig. 3.

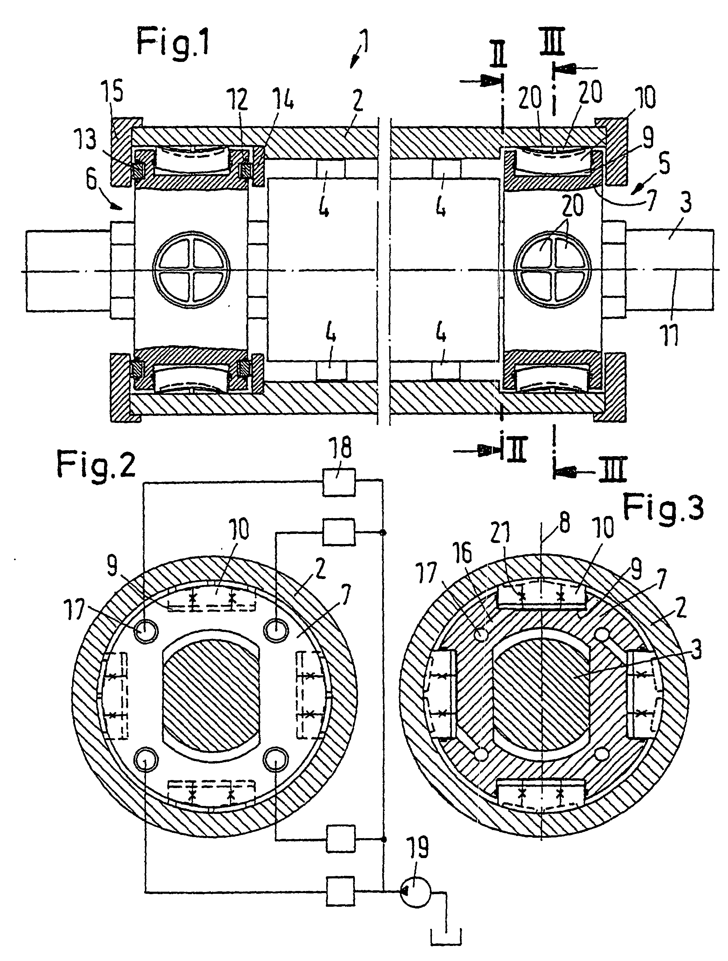

Fig. 1 zeigt eine Durchbiegungseinstellwalze 1 mit einem Walzenmantel, der über eine nur schematisch dargestellte hydraulische Stützelementanordnung 4 auf einem Träger 3 abgestützt ist. Der Walzenmantel 2 ist hierbei als Walzenrohr ausgebildet, d.h. er umgibt einen Hohlraum, in dem der Träger 3 angeordnet ist. Der Träger 3 ist hierbei undrehbar gehalten, während der Mantel 2 um den Träger 3 rotieren kann.

An seinen beiden axialen Enden ist der Walzenmantel 2 über jeweils ein Lager 5, 6 drehbar auf dem Träger 3 gelagert. Hierbei ist das Lager 5 als Loslager und das Lager 6 als Festlager ausgebildet.

Wie insbesondere aus den Fig. 2 und 3 zu erkennen ist, weist das Lager 5 einen Lagerring 7 auf, der parallel zu einer Pressenebene 8, in der die Walze 1 von einer nicht näher dargestellten Gegenwalze mit Druck beaufschlagt werden kann, verlagerbar ist. Bezogen auf die Darstellung der Fig. 1 bis 3 kann also der Walzenmantel 2 gegenüber dem Träger 3 nach oben und nach unten bewegt werden. Eine derartige Walze 1 bezeichnet man auch als Walze mit Mantelhub. Die Bewegung wird also dadurch realisiert, daß der Lagerring 7 gegenüber dem Träger 3 bewegt wird. Die Bewegung kann von der Stützelementanordnung 4 gesteuert werden.

Der Lagerring 7 weist in Umfangsrichtung gleichmäßig verteilt vier Zylinderbohrungen 9 auf, in denen jeweils ein Stützelement 10 angeordnet ist. Das Stützelement 10 ist im Lagerring 7 radial beweglich (bezogen auf die Rotationsachse 11 des Walzenmantels 2). Hierbei kann sich der mögliche Hub aber auf sehr kleine Bereiche begrenzen. Er muß lediglich einem Spiel eines C3-Pendelrollenlagers entsprechen, liegt also in der Größenordnung von etwa 0,1 bis 0,5 mm, vorzugsweise sogar nur im Bereich von 0,1 bis 0,3 mm. Diese Hubbewegung reicht aus, um Verformungen aufzunehmen, die sich aus thermischen Durchmesserunterschieden ergeben oder aus Walzenmantel- bzw. Trägerverformungen, die durch Niplasten entstehen können.

Wie insbesondere aus Fig. 1 zu erkennen ist, ist jedes Stützelement 10 an seiner der Rotationsachse 11 zugewandten Seite, also an seinem radial inneren Ende, gekrümmt. Wenn nun das Stützelement 10 aufgrund einer Belastung des Walzenmantels 2 bis zum Anschlag in den Lagerring 7 eingedrückt wird, dann kann auch bei einer Durchbiegung des Trägers 3 nicht die Situation auftreten, daß das Stützelement mit einer Kante auf dem Boden der Zylinderbohrung 9 aufsitzt, sondern es wird in jedem Fall eine flächige Berührung erfolgen.

Im vorliegenden Ausführungsbeispiel sind, wie dies aus den Fig. 2 und 3 ersichtlich ist, vier Stützelemente 10 vorgesehen. Es reichen aber auch drei Stützelemente aus, um die Lagerung des Walzenmantels 2 auf dem Träger 3 mit der nötigen Bestimmtheit zu gewährleisten.

Das Festlager 6 ist genauso ausgebildet wie das Loslager 5 mit dem Unterschied, daß zusätzlich hydrostatische Stützelemente 12, 13 vorgesehen sind, die mit Axialanschlägen 14, 15 am Walzenmantel 2 zusammenwirken.

Zwischen den Stützelementen 10 und dem Lagerring 7 wird in den Zylinderbohrungen 9 auf jeden Fall ein Druckraum gebildet und zwar auch dann, wenn das Stützelement 10 bis zum Anschlag in den Lagerring 7 eingefahren ist. Dies wird unter anderem durch die gekrümmte Unterseite der Stützelemente 10 erreicht. Wie aus Fig. 3 zu erkennen ist, ist jede Zylinderbohrung 9 durch einen Kanal 16 mit einer Versorgungsleitung 17 verbunden, durch die eine Hydraulikflüssgkeit unter Druck zugeführt wird. Dies ist ebenfalls in Fig. 2 erkennbar, wo die Mündungen der Versorgungsleitungen 17 zu erkennen sind. Jede Versorgungsleitung 17 ist über einen Regler 18 mit einer Pumpe 19 verbunden. Die Regler 18 sorgen dafür, daß immer ein konstanter Volumenstrom durch die Leitung 17 in die Drucktasche der jeweiligen Zylinderbohrung 9 gelangt.

Jedes Stützelement weist im vorliegenden Fall vier Drucktaschen 20 auf, von denen jede über eine Kapillare 21 mit dem Druckraum in der Zylinderbohrung 9 in Verbindung steht. Jede Kapillare 21 bildet eine Drosselleitung. Aufgrund des konstanten Volumenstromes in jede Druckkammer hinein, wird auch ein konstanter Volumenstrom zumindest in der Summe der Kapillaren 21 eines jeden Stützelements 10 erzeugt. Dementsprechend ist der Druckabfall über das Stützelement 10 in jedem Fall gleich. Man kann nun den Druckabfall in der Kapillare 21 so wählen, daß auch bei der stärksten Belastung des Walzenmantels 2 immer ein Mindestspalt zwischen der radialen Außenseite des Stützelementes 10, d.h. der Stützfläche, und der Innenseite des Walzenmantels 2 verbleibt, das im Bereich von 20 bis 30 µm liegt.

Dargestellt ist ein Ausführungsbeispiel, bei dem für alle Stützelemente 10 eine gemeinsame Pumpe 19 vorgesehen ist, aber jedes Stützelement 10 einen eigenen Regler 18 aufweist. Man kann aber auch für jedes Stützelement 10 eine eigene geregelte Pumpe 19 verwenden.

Im unbelasteten Zustand werden alle Stützelemente 10 etwa gleich weit aus dem Lagerring 7 herausgefahren werden, wobei allenfalls das Gewicht des Walzenmantels 2 kleine Unterschiede bewirken kann. Durch das Aufbringen von Last auf den Walzenmantel 2 wird sich das dem Nip zugewandte Stützelement 10 auf dem Boden der Zylinderbohrung 9 abstützen. Da die Kapillaren 21 aber weiterhin mit Öl versorgt werden und zwar mit konstantem Volumenstrom, wird der Druck in den Drucktaschen 20 steigen. Bei jeder Last stellen sich also die Drücke in den Drucktaschen 20 selbsttätig ein.

Die Dimensionierung der Pumpe 19 kann man aus der bekannten Druckdifferenz und der ebenfalls bekannten maximalen Belastung der Walze 1 vorherbestimmen. Im allgemeinen liegt der Druck über 100 oder sogar über 150 bar. Dadurch, daß die Stützelemente radial beweglich sind, kann man Durchmesserveränderungen des Walzenmantels, die beispielsweise von einer Temperaturänderung herrühren, kompensieren.

Die Lagerringe 7 sind an den Endabschnitten des Trägers angeordnet, wo der Träger 3 einen verminderten Durchmesser aufweist. Eine weitere Durchmesserverminderung kann sich axial weiter außen ergeben, wo der Träger normalerweise aufgehängt oder befestigt wird.

In dem Bereich, wo die Lagerringe 7 angeordnet sind, ist der Träger 3 parallel zur Pressenebene 8 abgeflacht. Der Lagerring weist entsprechend ebene Begrenzungsflächen an seiner Innenseite auf, so daß der Walzenmantel 2 mit Hilfe des Lagerringes 7 angehoben oder abgesenkt werden kann und zwar solange, bis der Lagerring in die eine oder andere Richtung am Träger 3 anstößt.

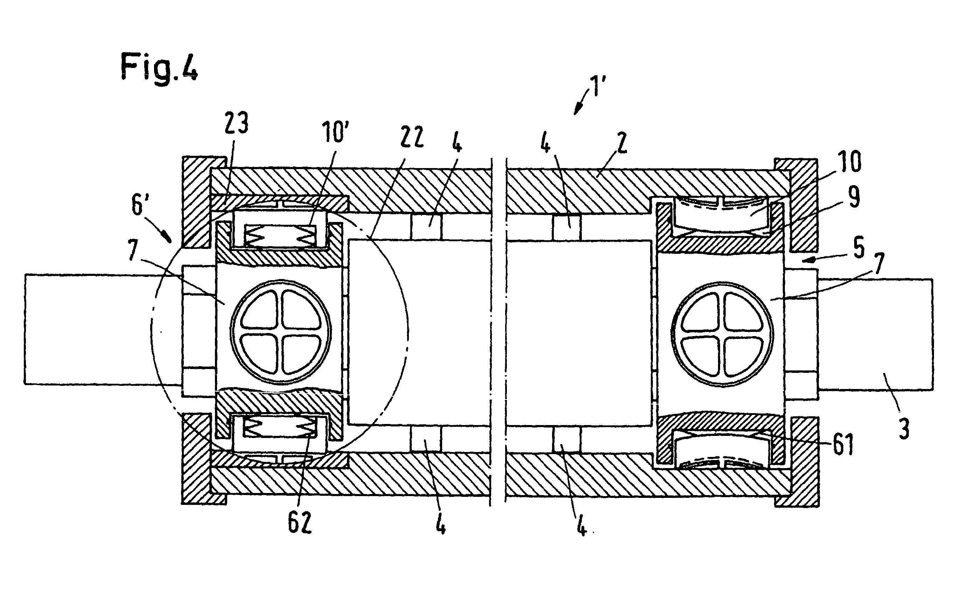

Fig. 4 zeigt eine alternative Ausgestaltung bei der gleiche Teile mit gleichen Bezugszeichen versehen sind.

Teile, die denen der Fig. 1 bis 3 entsprechen, sind mit gestrichenen Bezugszeichen versehen.

Geändert hat sich die Ausbildung des Festlagers 6'. Die Stützelemente 10' weisen eine Stützfläche auf, die in der in Fig. 4 dargestellten Schnittansicht auf einer Kreislinie 22 liegen. Der Walzenmantel weist an seiner radialen Innenseite ein Einsatzstück 23 auf, das eine Lagerfläche bildet, gegen die die Stützflächen der Stützflächen 10' anliegen. Diese Lagerfläche des Einsatzes 23 ist entsprechend gekrümmt, sie liegt auch auf der Kreislinie 22.

Mit dieser Ausgestaltung werden zwei Effekte erzielt. Zum einen ist der Walzenmantel 2 gegenüber dem Lagerring 7 des Festlagers 6' axial festgelegt, d.h. er kann nicht in Axialrichtung verschoben werden. Zum anderen ist es nun möglich, daß der Lagerring 7 bei einer Durchbiegung des Trägers 3 kippt und dabei die Stützelemente 10' gegenüber dem Walzenmantel 2 "schräg" gestellt werden. Die Stützflächen können jedoch weiterhin genauso weiterarbeiten wie bisher, weil sie an einer entsprechenden Lagerfläche anliegen.

In Fig. 4 ist weiterhin dazugekommen, daß die Stützelemente 10, 10' über Federn 61, 62 an ihrem Lagerring abgestützt sind. Beim rechten Stützelement 10 handelt es sich um eine Tellerfeder, die zwischen dem Boden der Zylinderbohrung 9 und dem Stützelement 10 angeordnet ist. Bei dem linken Stützelement 10' kann es sich um gegebenenfalls mehrere Schraubenfedern handeln, die zwischen dem Boden der entsprechenden Zylinderbohrung und dem Stützelement 10' angeordnet sind. Das Stützelemente 10' kann hierzu gegebenenfalls auch eine Ausnehmung aufweisen, wie dargestellt.

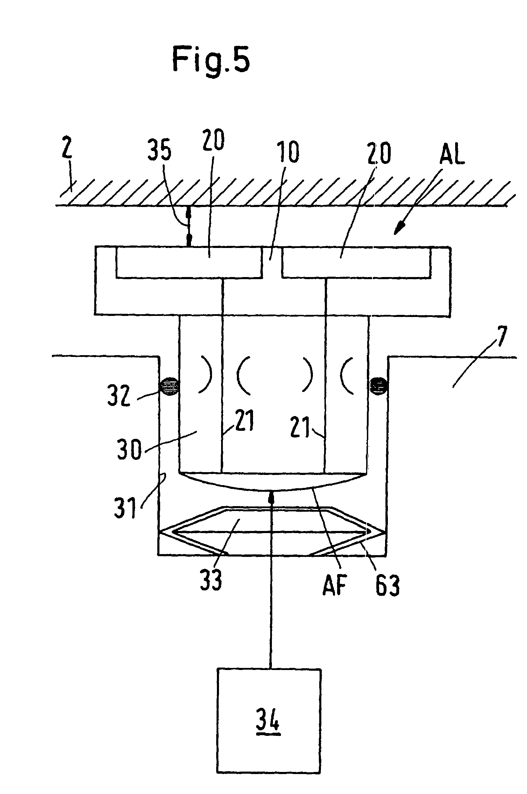

Fig. 5 zeigt in stark vergrößerter Darstellung eine schematische Ansicht eines Stützelements 10 einer abgewandelten Ausführungsform. Das Stützelement 10 ist mit einem Fuß 30 in den Lagerring 7 eingesetzt, genauer gesagt in eine entsprechende Bohrung 31. Der Fuß 30 kann gegenüber der Bohrung 31 noch mit Dichtungen 32 abgedichtet sein.

An seiner dem Walzenmantel 2 zugewandten Seite weist das Stützelement 10 eine Lagertaschenanordnung 20 auf, deren wirksame Fläche AL größer ist als eine Fläche AF, die durch die Stirnseite des Fußes 30 gebildet ist und dem Querschnitt des Fußes 30 entspricht. Hierbei umgrenzt der Fuß 30 und die Bohrung 31 einen Druckraum 33.

Das Stützelement 10 ist mit einer Kapillarenanordnung versehen, die durch mehrere Kapillaren 21 gebildet ist. Jede Lagertasche 20 ist durch mindestens eine Kapillare 21 mit dem Druckraum 33 verbunden. Die Drosselwiderstände zwischen den einzelnen Lagertaschen 20 und dem Druckraum 33 sind für alle Lagertaschen 20 gleich.

Der Druckraum 33 wird durch einen schematisch dargestellten Regler 34 mit einem konstanten Volumenstrom von Hydraulikflüssigkeit versorgt. Diese Flüssigkeit tritt nun über die Kapillaren 21 in die Lagertaschen 20 und von dort durch den Spalt 35 in den Raum zwischen Walzenmantel 2 und Lagerring 7, wie dies von hydrostatischen Stützelementen 4 her bekannt ist.

Die maximale Belastung des Walzenmantels 2 ist bekannt. Die Kapillaren 21 sind nun so dimensioniert, daß auch bei der größten vorkommenden Belastung der Spalt 35 noch eine Dicke im Bereich von 20 bis 30 µm aufweist. Andererseits sind die Kapillaren 21 so dimensioniert, daß sich bei einer unbelasteten Walze keine zu hohe Vorspannkraft des Stützelements 10 gegenüber dem Walzenmantel 2 ergibt.

Bei der höchst vorkommenden Belastung kann das Stützelement 10 bis zum Anschlag in den Lagerring 7 eingefahren werden. Dies ist die einzige Situation, wo eine Kraftverteilung zwischen Walzenmantel 2, Stützelement 10 und Lagerring 7 auftreten könnte, in der die Kraft zwischen Lagerring 7 und Stützelement 10 kleiner ist als die Kraft zwischen Walzenmantel 2 und Stützelement 10. Die Versorgung durch den Regler 34 muß daher so dimensioniert sein, daß diese Situation nicht auftritt, d.h. immer sichergestellt ist, daß ausreichende Mengen von Hydraulikflüssigkeit aus den Lagertaschen 20 in den Spalt 35 zwischen Walzenmantel 2 und Stützelement 10 übertreten können.

Auch bei dem Stützelement, das in Fig. 5 dargestellt ist, ist im Druckraum 33 eine Feder 63 angeordnet, die ebenfalls als Tellerfeder ausgebildet ist. Die Verhältnisse in Fig. 5 sind aus Gründen der Übersichtlichkeit übertrieben groß dargestellt. Dies gilt auch für die Abstände zwischen den einzelnen Teilen, nämlich dem Walzenmantel 2, dem Stützelement 10 und dem Boden der Zylinderbohrung 31. Es ist aber erkennbar, daß in der "am weitesten" ausgefahreren Position des Stützelements 10 ein Abstand zwischen dem Boden des Stützelements 10 und der Feder 63 besteht, d.h. der Hub des Stützelements 10 ist größer als die maximale Ausdehnung der Feder 63. Das Stützelement kann also über eine gewisse Wegstrecke in die Zylinderbohrung 31 eingefahren werden, ohne daß hierzu eine Krafterhöhung notwendig ist.

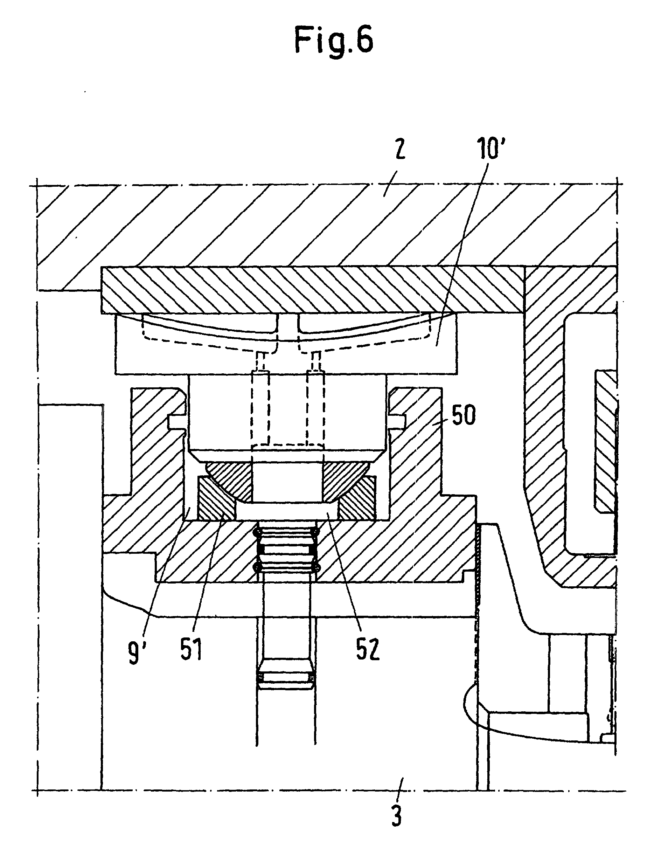

Fig. 6 zeigt in vergrößerter Darstellung ein Stützelement 10', das in einem Zylindergehäuse 50 angeordnet ist, wobei das Zylindergehäuse 50 auf dem Träger 3 befestigt ist. Ähnlich wie das Stützelement 10 in Fig. 1 ist der Boden des Stützelements 10' konvex gekrümmt. Im Gegensatz zu der Ausgestaltung nach Fig. 1 liegt der Boden des Stützelements 10' aber nicht unmittelbar auf dem Boden der Zylinderbohrung 9' auf, sondern auf einem Lagerring 51, der entsprechend konkav gewölbt ist. Wenn sich nun das Stützelement 10' in der Zylinderbohrung 9' neigt, dann behält es seine flächige Abstützung auf dem Ring 51, vermeidet aber ein Verkanten. Der Ring 51 umschließt eine Öffnung 52, durch die Hydraulikflüssigkeit in bekannter Weise zugeführt werden kann. Im unbelasteten Zustand kann das Stützelement 10' vom Ring 51 abheben.

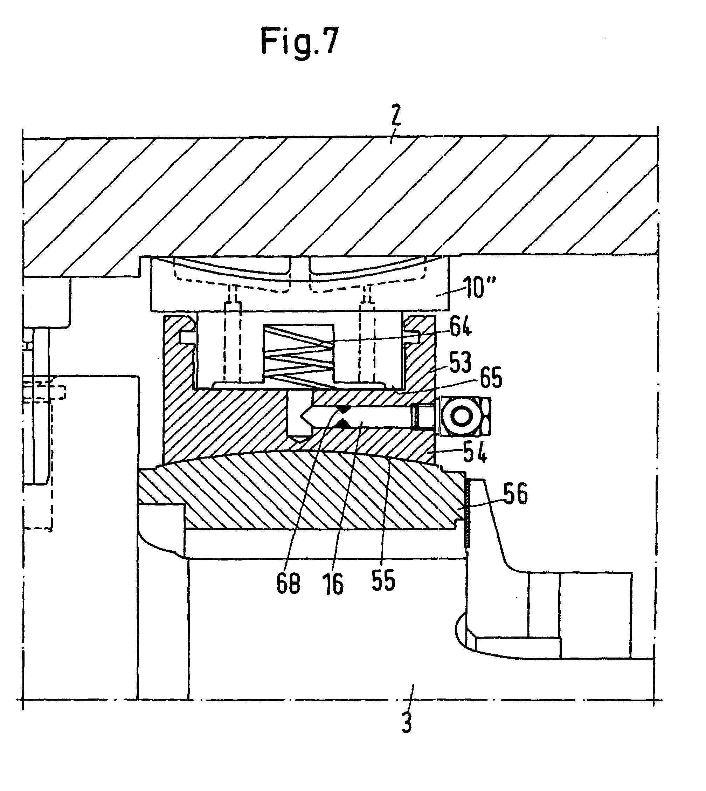

Fig. 7 zeigt eine alternative Ausgestaltung. In diesem Fall ist das Stützelement 10" in einem Zylinderkörper 53 angeordnet. Der Zylinderkörper 53 weist eine konkave Bodenfläche 54 auf, die sich an einer konvexen Gegenfläche 55 eines Bauteiles 56 abstützt, das am Träger 3 befestigt ist. Natürlich kann die Gegenfläche 55 auch unmittelbar auf dem Träger erzeugt werden.

Auch mit einer derartigen Ausgestaltung ist es möglich, daß sich der Träger 3 durchbiegt. In diesem Fall verschiebt sich der Zylinderkörper 53 auf dem Bauteil 56, so daß das Stützelement 10" seine Ausrichtung zum Walzenmantel 2 beibehalten kann.

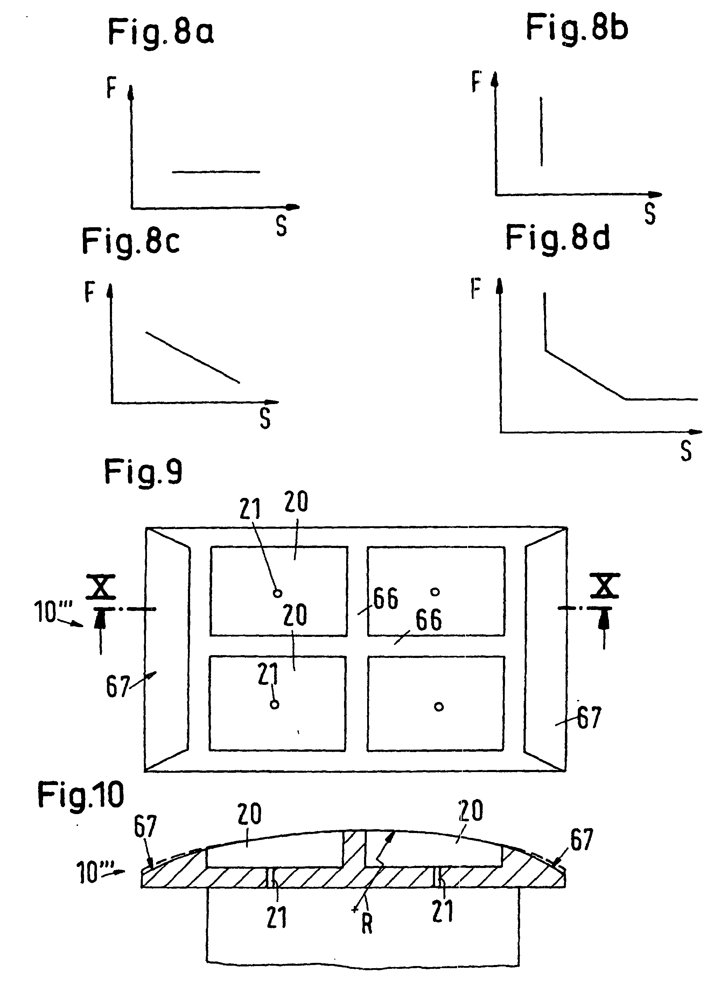

Auch bei dem Stützelement 10'' ist eine Feder 64 vorgesehen. Das Stützelement 10'' weist aber einen Anschlag 65 auf, mit dem das Stützelement 10" trotz des Vorhandenseins der Feder 64 in Hartlage gefahren werden kann. Die Auswirkungen der unterschiedlichen Federkonstellationen sollen anhand von Fig. 8 näher erläutert werden.

Fig. 8c zeigt den normalen Verlauf einer Kraft F über einen Weg s, wenn das Stützelement 10 über seinen gesamten Hub von den Federn 61-64 abgestützt ist. Es handelt sich um die typische lineare Kraft-Weg-Charakteristik einer Feder.

Fig. 8a zeigt den Fall eines Stützelements, das sich frei bewegen kann. Dieses Stützelement erzeugt über den Weg S eine konstante Ansteigkraft F. Ein derartiger Fall tritt beispielsweise dann auf, wenn das Stützelement 10 ohne Feder im Lagerring 7 angeordnet ist oder, wie bei der Ausgestaltung nach Fig. 5, wenn es sich über einen kleinen Hub ohne Beeinflussung der Feder bewegen kann. Fährt das Stützelement 10 hingegen in einen starren Anschlag, wie beispielsweise bei der Ausgestaltung nach Fig. 7, dann ändert sich der Weg über die Kraft praktisch nicht mehr. Wenn nun, wie in Fig. 8d dargestellt, die drei Fälle 8a-8c kombiniert, dann ist praktisch jeder beliebige Federcharakteristik einstellbar, wie in Fig. 8d dargestellt.

Wenn man die Feder 61-63 schon während der Montage der Lagereinzelteile vorspannt, ein Spiel zwischen Stützelement 10 und Feder 61,62,64 also eliminiert, so erhält man eine spielfreie Walzenlagerung. Die Lagerung reagiert bei jeder Lagerbewegung sofort mit einer Rückstellkraft. Dies stellt gegenüber der Lagerung auf einem Wälzlager einen großen Vorteil dar. Eine Lastwechselreaktion erfolgt wesentlich weicher (gedämpfter) als bei einer mit Spiel behafteten Lagerung. Ist die Kraftaufnahme der Feder erschöpft, so kann die Lastaufnahme der Lagerung durch einen zusätzlichen Anschlag, wie oben beschrieben, gesteigert werden.

Fig. 7 zeigt weiterhin, daß in der Zuführleitung 16 eine Drossel 68 angeordnet ist. Die Drossel 68 ist hier lediglich schematisch dargestellt. Sie kann durch vielerlei Maßnahmen realisiert werden, beispielsweise Kapillarleitungen, enge Bohrungen oder dergleichen.

Fig. 9 zeigt in Draufsicht ein Stützelement 10''', das anstelle des Stützelements 10 in den Fig. 1 bis 3 verwendet werden kann. Das Stützelement 10''' weist Lagertaschen 20 auf, die durch die Kapillaren 21 versorgt werden. Die Lagertaschen 20 sind durch Stege 66 voneinander getrennt. Zusätzlich weist das Stützelement 10''' an seinen beiden Enden in Umfangsrichtung abgeschrägte Bereiche 67, d.h. Bereiche, in denen die dem Walzenmantel zugewandte Stützfläche des Stützelements 10''' nicht mehr den Radius R der Innenseite des Walzenmantels 2 aufweist, sondern hierzu keilförmig verkleinert ausgebildet ist. In diesen abgeschrägten Bereichen, die an sich bekannt sind, kann sich im Betrieb ein hydrodynamischer Traganteil ausbilden, der zu besseren Notlaufeigenschaften und geringerem Energieverbrauch führt.

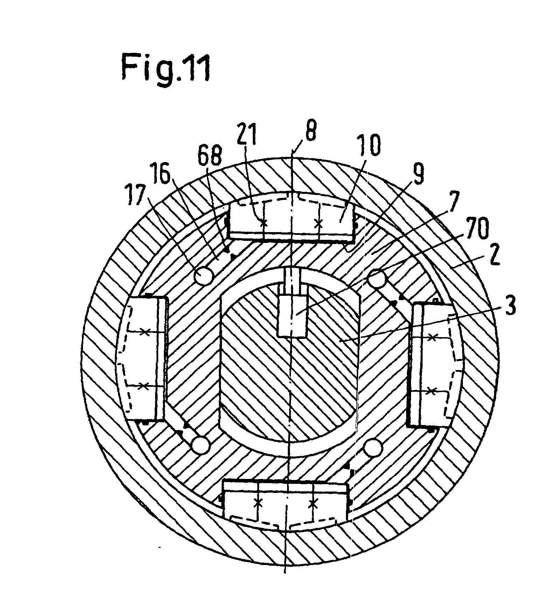

Fig. 11 zeigt einen Querschnitt eines anderen Ausführungsbeispiels der Walze, der im Grunde dem Querschnitt von Fig. 3 entspricht. Gleiche Teile sind mit gleichen Bezugszeichen versehen. Hinzugekommen ist ein Kraftgeber 70, beispielsweise eine hydraulische Kolben-Zylinder-Anordnung, zwischen dem Träger 3 und dem Lagerring 7. Dieser Kraftgeber wirkt in radialer Richtung und zwar in der Pressenebene 8. Mit Hilfe dieses Kraftgebers 70 ist es möglich, auch im Lagerbereich zusätzliche Kräfte auf den Walzenmantel 2 bringen zu können. Wenn der Kraftgeber 70 zweiseitig wirkend ausgebildet ist oder ein entsprechender Kraftgeber in die andere Richtung wirken kann, ist es möglich, im Lagerbereich den Walzenmantel 2 so zu belasten, daß er seinen Druck im Nip mit einer nicht näher dargestellten Gegenwalze vermindert.

## Patentansprüche

1. Durchbiegungseinstellwalze (1) mit einem drehbaren Walzenmantel (2), einem innerhalb des Walzenmantels (2) angeordneten nicht drehenden Träger (3), einer hydraulischen Stützelementanordnung (4) zwischen Träger (3) und Walzenmantel (2), einem Lagerring (7) an jedem Ende des Walzenmantels (2), der in einer Pressenebene relativ zum Träger (3) bewegbar ist, und einer Lageranordnung zwischen Lagerring (7) und Walzenmantel (2), die durch mindestens drei in Umfangsrichtung verteilt angeordnete hydrostatische Stützelemente (10) gebildet ist, von denen mindestens eines gegenüber dem Lagerring (7) beweglich ist, **dadurch gekennzeichnet, daß** das Stützelement (10) unter Last bis zur Hartlage in den Lagerring (7) einfahrbar ist.

2. Walze nach Anspruch 1, **dadurch gekennzeichnet, daß** das bewegliche Stützelement (10) eine Lagertaschenanordnung (20) aufweist, deren wirksame Fläche (AL) größer ist als eine Fläche (AF) des Stützelements (10), auf die ein Druck zwischen Lagerring (7) und Stützelement (10) wirkt.

3. Walze nach Anspruch 1 oder 2, **dadurch gekennzeichnet, daß** die Lagertaschenanordnung (20) mit einer Versorgungseinrichtung (18) verbunden ist, die einen konstanten Volumenstrom von hydraulischer Flüssigkeit liefert.

4. Walze nach einem der Ansprüche 1 bis 3, **dadurch gekennzeichnet, daß** die Lagertaschenanordnung (20) über eine das Stützelement (10) durchsetzende Kapillarenanordnung (21) mit einem Druckraum (33) zwischen Stützelement (10) und Lagerring (7) verbunden ist.

5. Walze nach Anspruch 4, **dadurch gekennzeichnet, daß** die Kapillarenanordnung (21) so dimensioniert ist, daß im unbelasteten Zustand eine vorbestimmte Vorspannkraft nicht überschritten wird, bei einer vorbestimmten Belastung aber eine vorbestimmte minimale Spalthöhe gewährleistet ist.

6. Walze nach Anspruch 4 oder 5, **dadurch gekennzeichnet, daß** die Versorgungseinrichtung (18) so an die Kapillarenanordnung (21) angepaßt ist, daß sich bei maximaler Last ein minimaler Spalt zwischen Stützelement (10) und Walzenmantel (2) im Bereich von 20 bis 30 µm ergibt.

7. Walze nach einem der Ansprüche 1 bis 6, **dadurch gekennzeichnet, daß** die beweglichen Stützelemente (10) eine Hubhöhe gegenüber dem Lagerring (7) in radialer Richtung aufweisen, die einer maximalen Veränderung entspricht, die sich aus thermischen Durchmesserunterschieden und/oder Walzenmantel-bzw. Trägerverformungen durch Niplasten ergibt.

8. Walze nach Anspruch 7, **dadurch gekennzeichnet, daß** die Hubhöhe im Bereich von 0,1 bis 0,5 mm liegt.

9. Walze nach einem der Ansprüche 1 bis 8, **dadurch gekennzeichnet, daß** zumindest ein Stützelement (10) an seiner dem Träger (3) zugewandten Unterseite einen gekrümmten Boden aufweist.

10. Walze nach einem der Ansprüche 1 bis 9, **dadurch gekennzeichnet, daß** zumindest ein Stützelement (10'') in einem Zylindergehäuse (53) angeordnet ist, das einen konkav gewölbten Boden (54) aufweist, der sich auf einer entsprechend konvex gewölbten Fläche (55) auf Seiten des Trägers abstützt.

11. Walze nach einem der Ansprüche 1 bis 10, **dadurch gekennzeichnet, daß** die Stützelemente (10') an einem Ende der Walze (1') eine gekrümmte Stützfläche aufweisen, die an einer gleichartig gekrümmten Lagerfläche an der Innenseite des Walzenmantels (2) anliegt.

12. Walze nach Anspruch 11, **dadurch gekennzeichnet, daß** die Stützfläche entlang einer sich in einem Radialschnitt ergebenden Linie (22) kreislinienförmig gekrümmt ist.

13. Walze nach einem der Ansprüche 1 bis 12, **dadurch gekennzeichnet, daß** ein Lagerring (7) über hydrostatische Gleitflächen (12, 13) axial am Walzenmantel (2) anliegt.

14. Walze nach einem der Ansprüche 1 bis 13, **dadurch gekennzeichnet, daß** die Lagerringe (7) auf Endabschnitten des Trägers angeordnet sind, die einen geringeren Durchmesser als ein Abschnitt des Trägers (3) axial zwischen den Endabschnitten aufweisen.

15. Walze nach einem der Ansprüche 1 bis 14, **dadurch gekennzeichnet, daß** zwischen dem Lagerring (7) und dem Stützelement (10, 10', 10'') eine Feder (61-64) angeordnet ist.

16. Walze nach Anspruch 15, **dadurch gekennzeichnet, daß** das Stützelement (10') einen parallel zur Feder (64) bewegbaren Anschlag (65) aufweist, der nach einem vorbestimmten Federweg zur Anlage an den Lagerring (51) kommt.

17. Walze nach Anspruch 15 oder 16, **dadurch gekennzeichnet, daß** der maximale Federweg kürzer als der maximale Hub des Stützelements (10) ist.

18. Walze nach einem der Ansprüche 1 bis 17, **dadurch gekennzeichnet, daß** die Stützfläche mindestens eine angeschrägte Anlaufkante (67) aufweist.

19. Walze nach einem der Ansprüche 1 bis 18, **dadurch gekennzeichnet, daß** zwischen dem Träger (3) und dem Lagerring (7) ein Kraftgeber (70) angeordnet ist, der in radialer Richtung in einer Pressenebene (8) wirkt.

20. Walze nach einem der Ansprüche 1 bis 19, **dadurch gekennzeichnet, daß** in einer Zuleitung (16) zum Druckraum (9) eine Drossel (68) angeordnet ist.

21. Verfahren zum Betreiben einer Durchbiegungseinstellwalze mit einem Walzenmantel, der um einen Träger rotiert und im Bereich seiner axialen Enden von jeweils einer Lageranordnung abgestützt wird, die einen Lagerring und mindestens drei in Umfangsrichtung auf dem Lagerring verteilte hydrostatische Stützelemente mit Lagertaschen aufweist, **dadurch gekennzeichnet, daß** die Lagertaschen mit einem konstanten Volumenstrom von Hydraulikflüssigkeit versorgt werden und mindestens ein Stützelement unter Last bis zur Hartlage in den Lagerring eingefahren wird.

22. Verfahren nach Anspruch 21, **dadurch gekennzeichnet, daß** die Hydraulikflüssigkeit durch eine Kapillarenanordnung im Stützelement geleitet wird.

23. Verfahren nach Anspruch 22, **dadurch gekennzeichnet, daß** man die wirksame Fläche der Lagertaschenanordnung größer macht als die Querschnittsfläche des Stützelements im Lagerring.

## Claims

1. Controlled deflection roll (1) having a rotatable roll shell (2), a non-rotating carrier (3) arranged within the roll shell (2), a hydraulic supporting element arrangement (4) between carrier (3) and roll shell (2), a bearing ring (7) at each end of the roll shell (2), which can be moved relative to the carrier (3) in a press plane, and a bearing arrangement between bearing ring (7) and roll shell (2), which is formed by means of at least three hydrostatic supporting elements (10) arranged distributed in the circumferential direction, of which at least one can be moved with respect to the bearing ring (7), **characterized in that**, under load, the supporting element (10) can be moved into the bearing ring (7) until it makes firm contact.

2. Roll according to Claim 1, **characterized in that** the movable supporting element (10) has a bearing pocket arrangement (20) whose effective area (AL) is greater than an area (AF) of the supporting element (10) on which a pressure acts between bearing ring (7) and supporting element (10).

3. Roll according to Claim 1 or 2, **characterized in that** the bearing pocket arrangement (20) is connected to a supply device (18) which supplies a constant volume flow of hydraulic fluid.

4. Roll according to one of Claims 1 to 3, **characterized in that** the bearing pocket arrangement (20) is connected via a capillary arrangement (21) that passes through the supporting element (10) to a pressure chamber (33) between supporting element (10) and bearing ring (7).

5. Roll according to Claim 4, **characterized in that** the capillary arrangement (21) is dimensioned such that, in the unloaded state, a predetermined prestressing force is not exceeded but, under a predetermined loading, a predetermined minimum gap height is ensured.

6. Roll according to Claim 4 or 5, **characterized in that** the supply device (18) is matched to the capillary arrangement (21) in such a way that, under maximum load, the result is a minimum gap between supporting element (10) and roll shell (2) in the range from 20 to 30 µm.

7. Roll according to one of Claims 1 to 6, **characterized in that** the movable supporting elements (10) have a lifting height with respect to the bearing ring (7) in the radial direction which corresponds to a maximum change which results from thermal diameter differences and and/or roll shell or carrier deformations as a result of nip loads.

8. Roll according to Claim 7, **characterized in that** the lifting height lies in the range from 0.1 to 0.5 mm.

9. Roll according to one of Claims 1 to 8, **characterized in that**, on its underside facing the carrier (3), at least one supporting element (10) has a curved base.

10. Roll according to one of Claims 1 to 9, **characterized in that** at least one supporting element (10") is arranged in a cylinder housing (53) which has a concavely curved base (54), which is supported on a correspondingly convexly curved surface (55) on the side of the carrier.

11. Roll according to one of Claims 1 to 10, **characterized in that** the supporting elements (10') at one end of the roll (1') have a curved supporting surface, which rests on an identically curved bearing surface on the inside of the roll shell (2).

12. Roll according to Claim 11, **characterized in that** the supporting surface is curved in the shape of a circular line along a line (22) which results in a radial section.

13. Roll according to one of Claims 1 to 12, **characterized in that** a bearing ring (7) rests axially on the roll shell (2) via hydrostatic sliding surfaces (12, 13).

14. Roll according to one of Claims 1 to 13, **characterized in that** the bearing rings (7) are arranged on end sections of the carrier which have a smaller diameter than a section of the carrier (3) axially between the end sections.

15. Roll according to one of Claims 1 to 14, **characterized in that** a spring (61-64) is arranged between the bearing ring (7) and the supporting element (10, 10', 10'').

16. Roll according to Claim 15, **characterized in that** the supporting element (10') has a stop (65) which can be moved parallel to the spring (64) and which, after a predetermined spring travel, comes to rest on the bearing ring (51).

17. Roll according to Claim 15 or 16, **characterized in that** the maximum spring travel is shorter than the maximum stroke of the supporting element (10).

18. Roll according to one of Claims 1 to 17, **characterized in that** the supporting surface has at least one chamfered run-on edge (67).

19. Roll according to one of Claims 1 to 18, **characterized in that** between the carrier (3) and the bearing ring (7) there is arranged a force transmitter (70) which acts in the radial direction in a press plane (8).

20. Roll according to one of Claims 1 to 19, **characterized in that** a restrictor (68) is arranged in a feed line (16) to the pressure chamber (9).

21. Method of operating a controlled deflection roll having a roll shell which rotates about a carrier and, in the region of its axial ends, is supported in each case by a bearing arrangement which has a bearing ring and at least three hydrostatic supporting elements with bearing pockets distributed on the bearing ring in the circumferential direction, **characterized in that** the bearing pockets are supplied with a constant volume flow of hydraulic fluid, and, under load, at least one supporting element is moved into the bearing ring until it makes firm contact.

22. Method according to Claim 21, **characterized in that** the hydraulic fluid is led through a capillary arrangement in the supporting element.

23. Method according to Claim 22, **characterized in that** the effective area of the bearing pocket arrangement is made larger than the cross-sectional area of the supporting element in the bearing ring.

## Revendications

1. Rouleau à réglage de la flexion (1) comprenant une enveloppe de rouleau rotative (2), un support non rotatif (3) disposé à l'intérieur de l'enveloppe de rouleau (2), un agencement d'élément de support hydraulique (4) entre le support (3) et l'enveloppe de rouleau (2), une bague de roulement (7) à chaque extrémité de l'enveloppe de rouleau (2), qui peut se déplacer dans un plan de pressage par rapport au support (3) et un agencement de palier entre la bague de roulement (7) et l'enveloppe de rouleau (2), qui est formé par au moins trois éléments de support hydrostatiques (10) répartis dans la direction périphérique, dont au moins un est mobile par rapport à la bague de roulement (7), **caractérisé en ce que** l'élément de support (10) peut être introduit sous charge jusqu'à venir en appui à fond dans la bague de roulement (7).

2. Rouleau selon la revendication 1, **caractérisé en ce que** l'élément de support mobile (10) présente un agencement de poche de palier (20) dont la surface active (AL) est plus grande qu'une surface (AF) de l'élément de support (10) sur laquelle une pression agit entre la bague de roulement (7) et l'élément de support (10).

3. Rouleau selon la revendication 1 ou 2, **caractérisé en ce que** l'agencement de poche de palier (20) est connecté à un dispositif d'alimentation (18) qui fournit un débit volumique constant de liquide hydraulique.

4. Rouleau selon l'une quelconque des revendications 1 à 3, **caractérisé en ce que** l'agencement de poche de palier (20) est connecté par le biais d'un agencement capillaire (21) traversant l'élément de support (10) à une chambre de pression (33) entre l'élément de support (10) et la bague de roulement (7).

5. Rouleau selon la revendication 4, **caractérisé en ce que** l'agencement capillaire (21) est dimensionné de telle sorte que dans l'état non chargé, une force de précontrainte prédéfinie ne soit pas dépassée, et que pour une sollicitation prédéterminée, une hauteur de fente minimale prédéterminée soit toutefois garantie.

6. Rouleau selon la revendication 4 ou 5, **caractérisé en ce que** le dispositif d'alimentation (18) est adapté à l'agencement capillaire (21) de telle manière que pour une charge maximale, il en résulte une fente minimale entre l'élément de support (10) et l'enveloppe de rouleau (2), de l'ordre de 20 à 30 µm.

7. Rouleau selon l'une quelconque des revendications 1 à 6, **caractérisé en ce que** les éléments de support mobiles (10) présentent une hauteur de levage par rapport à la bague de roulement (7) dans la direction radiale, qui correspond à une modification maximale qui résulte de différences de diamètre thermiques et/ou de déformations de l'enveloppe de rouleau ou du support du fait de charges de la ligne de contact.

8. Rouleau selon la revendication 7, **caractérisé en ce que** la hauteur de levage est comprise entre 0,1 et 0,5 mm.

9. Rouleau selon l'une quelconque des revendications 1 à 8, **caractérisé en ce qu'**au moins un élément de support (10) présente, sur son côté inférieur tourné vers le support (3), un fond courbe.

10. Rouleau selon l'une quelconque des revendications 1 à 9, **caractérisé en ce qu'**au moins un élément de support (10") est disposé dans un boîtier cylindrique (53) qui présente un fond de courbure concave (54) qui s'appuie sur une surface (55) de courbure correspondante convexe du côté du support.

11. Rouleau selon l'une quelconque des revendications 1 à 10, **caractérisé en ce que** les éléments de support (10') présentent à une extrémité du rouleau (1') une surface de support courbe qui s'applique contre une surface de palier de courbure similaire au niveau du côté interne de l'enveloppe de rouleau (2).

12. Rouleau selon la revendication 11, **caractérisé en ce que** la surface de support est courbée le long d'une ligne (22) de forme circulaire obtenue en coupe radiale.

13. Rouleau selon l'une quelconque des revendications 1 à 12, **caractérisé en ce qu'**une bague de roulement (7) s'applique axialement sur l'enveloppe de rouleau (2) par le biais de surfaces de glissement hydrauliques (12, 13).

14. Rouleau selon l'une quelconque des revendications 1 à 13, **caractérisé en ce que** les bagues de roulement (7) sont disposées sur des portions d'extrémité du support, qui présente un diamètre plus petit qu'une portion du support (3) axialement entre les portions d'extrémité.

15. Rouleau selon l'une quelconque des revendications 1 à 14, **caractérisé en ce que** l'on dispose entre la bague de roulement (7) et l'élément de support (10, 10', 10") un ressort (61 - 64).

16. Rouleau selon la revendication 15, **caractérisé en ce que** l'élément de support (10') présente une butée (65) déplaçable parallèlement au ressort (64), qui vient en butée contre la bague de roulement (51) après une course prédéterminée du ressort.

17. Rouleau selon la revendication 15 ou 16, **caractérisé en ce que** la course maximale du ressort est plus courte que la levée maximale de l'élément de support (10).

18. Rouleau selon l'une quelconque des revendications 1 à 17, **caractérisé en ce que** la surface de support présente au moins une arête d'approche (67) biseautée.

19. Rouleau selon l'une quelconque des revendications 1 à 18, **caractérisé en ce qu'**un capteur de force (70) est disposé entre le support (3) et la bague de roulement (7), lequel agit dans la direction radiale dans un plan de pressage (8).

20. Rouleau selon l'une quelconque des revendications 1 à 19, **caractérisé en ce que** l'on prévoit un étranglement (68) dans une conduite d'alimentation (16) allant à la chambre de pression (9).

21. Procédé pour faire fonctionner un rouleau à réglage de la flexion comprenant une enveloppe de rouleau, qui tourne autour d'un support et qui est supportée dans la région de ses extrémités axiale par un agencement de palier respectif, qui présente une bague de roulement et au moins trois éléments de support hydrostatiques répartis dans la direction périphérique sur la bague de roulement, avec des poches de palier, **caractérisé en ce que** les poches de palier sont alimentées avec un débit volumique constant de liquide hydraulique et **en ce qu'**au moins un élément de support est introduit sous charge jusqu'à venir en appui à fond dans la bague de roulement.

22. Procédé selon la revendication 21, **caractérisé en ce que** le liquide hydraulique est guidé dans l'élément de support par un agencement capillaire.

23. Procédé selon la revendication 22, **caractérisé en ce que** l'on rend la surface active de l'agencement de poche de palier plus grande que la surface en section transversale de l'élément de support.
